# EUROPÄISCHE PATENTANMELDUNG

(11) **EP 2 051 315 A1**
(43) Veröffentlichungstag der Anmeldung: **22.04.2009**
(21) Anmeldenummer: 08017688.6
(22) Anmeldetag: 09.10.2008
(51) Int. Cl.: H01M 2/10, H01M 2/34, H01M 10/42, H01M 10/44, H01M 10/48

(54) **Akkumulator-Gerät-Kombination und Akkumulator**

(30) Priorität: 16.10.2007 DE 102007051051
(71) Anmelder: C. & E. Fein GmbH, 73529 Schwäbisch Gmünd-Bargau (DE)
(72) Erfinder: Barza, Radu, 73540 Heubach (DE); Schreiber, Alfred, 73230 Kirchheim (DE)
(74) Vertreter: Gahlert, Stefan

(57) **Zusammenfassung**

Eine Akkumulator-Gerät-Kombination und ein Akkumulator werden vorgeschlagen. Bei der Kombination ist das Gerät mit dem Akkumulator (10) über mindestens eine Stromversorgungsleitung (14, 16) verbunden. In dem Gerät ist ein Betriebsschalter (46) für das Gerät angeordnet. In dem Akkumulator (10) ist eine Überwachungseinheit angeordnet. Die Überwachungseinheit enthält Mittel zum Erkennen eines Alarmzustandes in dem Akkumulator (10). Die Mittel stehen mit dem Betriebsschalter (46) in Wirkverbindung (Figur 1).

## Beschreibung

Die Erfindung betrifft eine Akkumulator-Gerät-Kombination.

Die Erfindung betrifft ferner einen Akkumulator.

Im Zuge des allgemeinen Trends zu portablen, kabellosen elektrischen und elektronischen Geräten aller Art werden in zunehmendem Masse Akkumulatoren zur Stromversorgung dieser Geräte benötigt. Auf der anderen Seite sind für den Betrieb der Akkumulatoren Ladegeräte erforderlich, um die Akkumulatoren bei Bedarf wieder aufzuladen.

Unter "Geräte" sind im Rahmen der vorliegenden Erfindung sowohl elektrische Verbraucher aller Art zu verstehen, für deren Stromversorgung ein Akkumulator benötigt wird, insbesondere Elektrowerkzeuge und verwandte Geräte. Andererseits sind darunter auch Ladegeräte zu verstehen.

Wenn ein Akkumulator an einen Verbraucher angeschlossen wird, dann entnimmt der Verbraucher Strom aus dem Akkumulator, und es muss gewährleistet sein, dass der Akkumulator dabei nicht beschädigt wird, insbesondere durch eine zu hohe Stromentnahme oder durch eine Vollentladung. Andererseits muss dann, wenn ein Akkumulator an ein Ladegerät angeschlossen ist und durch Strom aus dem Ladegerät wieder aufgeladen wird, sichergestellt sein, dass der Akkumulator nicht Schaden nimmt, weil beispielsweise ein zu hoher Strom fließt oder der Akkumulator überladen wird. Je nach Bauart des Akkumulators kann bei diesen Zuständen eine Beschädigung oder gar eine Zerstörung des Akkumulators auftreten.

Für die genannten mobilen Anwendungen werden heutzutage Akkumulatoren, so genannte "Akkupacks", unterschiedlicher Art verwendet, beispielsweise Nickel-Kadmium-Akkus (NiCd), Nickel-Metallhydrid-Akkus (NiMH) und Lithium-Ionen-Akkus. Bei Letzteren sind Akkus mit unterschiedlichen Metallen (Mn, Ni, Co, Ti) in diversen Kombinationen bekannt. Für elektronische Geräte, beispielsweise tragbare Computer, werden LiCoO₂-Akkus verwendet, für den im Rahmen der vorliegenden Erfindung besonders interessierenden Anwendungsfall bei Elektrowerkzeugen sind Akkus vom Typ LiMn₂O₄, LiNiO₂, LiTi₅O₁₂, LiNi₁₋ₓCOₓO₂ und dgl. im Einsatz. Diese Akkus besitzen eine Zell-Nennspannung, die zwischen 3,6 und 3,7 V liegt. In jüngster Zeit sind ferner Lithium-Ionen-Akkus vom Typ Lithium-Eisen-Phosphat bekannt geworden, deren Zell-Nennspannung 3,3 V beträgt.

Die Erfindung ist hinsichtlich der Bauart des Akkumulators nicht auf die vorgenannten Beispiele beschränkt.

Der Erfindung liegt die Aufgabe zugrunde, eine Akkumulator-Gerät-Kombination sowie einen Akkumulator der eingangs genannten Art dahingehend weiterzubilden, dass die vorstehend erläuterten Nachteile vermieden werden. Insbesondere soll eine Beschädigung oder gar Zerstörung des Akkumulators durch unsachgemäße Stromentnahme oder Stromaufnahme sicher und mit möglichst einfachen Mittel bewirkt werden.

Bei einer Akkumulator-Gerät-Kombination der eingangs genannten Art wird diese Aufgabe erfindungsgemäß durch eine derartige Kombination gelöst, bei der das Gerät mit dem Akkumulator über mindestens eine Stromversorgungsleitung verbunden ist, mit einem in dem Gerät angeordneten Betriebsschalter für das Gerät und einer in dem Akkumulator angeordneten Überwachungseinheit, wobei die Überwachungseinheit Mittel zum Erkennen eines Alarmzustandes in dem Akkumulator enthält und die Mittel mit dem Betriebsschalter in Wirkverbindung stehen.

Bei einem Akkumulator der eingangs genannten Art wird die Aufgabe erfindungsgemäß gelöst durch einen Akkumulator mit mindestens einem Stromversorgungsanschluss zum Verbinden mit einem Gerät, mit einer in dem Akkumulator angeordneten Überwachungseinheit, wobei die Überwachungseinheit Mittel zum Erkennen eines Alarmzustandes in dem Akkumulator enthält und die Mittel mit einem Signalanschluss des Akkumulators verbunden sind.

Die der Erfindung zugrunde liegende Aufgabe wird auf diese Weise vollkommen gelöst.

Die Erfindung macht sich nämlich die Tatsache zunutze, dass die Geräte der hier interessierenden Art, also beispielsweise ein Elektrowerkzeug als Verbraucher oder ein Ladegerät, ohnehin einen Betriebsschalter enthalten und daher der Akkumulator gegen Beschädigung in äußerst einfacher Weise dadurch geschützt werden kann, dass die Stromabgabe an den Verbraucher bzw. die Stromzufuhr vom Ladegerät durch Betätigen bzw. Abkoppeln des Betriebsschalters abgebrochen wird.

Insoweit ist bevorzugt, wenn die Mittel durch Betätigen des Betriebsschalters die mindestens eine Stromversorgungsleitung stromlos schalten.

Alternativ können die Mittel das Gerät auch ganz abschalten, beispielsweise die mindestens eine Stromversorgungsleitung unterbrechen.

Weiterhin ist bevorzugt, wenn die Überwachungseinheit eine Überwachungselektronik ist.

Bei besonders bevorzugten Ausführungsformen der Erfindung überwacht die Überwachungselektronik eine den Akkumulator charakterisierende Zustandsgröße, und bei Überschreiten eines vorgegebenen Grenzwertes der Zustandsgröße treten die Mittel mit dem Betriebsschalter in Wirkverbindung.

Bei Varianten dieser Ausführungsbeispiele kann die Zustandsgröße die Spannung, beispielsweise die Ladespannung, der Strom, beispielsweise der Ladestrom, der Innenwiderstand oder die Temperatur des Akkumulators, oder die erste zeitliche Ableitung der vorgenannten Größen sein. Eine Überwachung der ersten zeitlichen Ableitung führt zu besonders verlässlichen Ergebnissen.

Bei Ausführungsformen der Erfindung werden mindestens zwei Zustandsgrößen gleichzeitig überwacht.

Diese Maßnahme hat den Vorteil, dass eine noch genauere Erfassung kritischer Zustände möglich wird.

Bei weiteren Ausführungsformen der Erfindung wird der Alarmzustand durch ein Spannungssignal an einem Signalanschluss des Akkumulators signalisiert, insbesondere dadurch, dass an dem Signalanschluss bei Nicht-Vorhandensein eines Alarmzustandes ein Nullsignal und bei Vorhandensein eines Alarmzustandes ein Spannungssignal anliegt.

Diese Maßnahme hat den Vorteil, dass eine äußerst einfache Anordnung entsteht, die auch noch dann funktionstüchtig ist, wenn das übrige Gerät oder dessen Steuerung defekt ist.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1:: ein schematisiertes Schaltbild eines ersten Ausführungsbeispiels einer erfindungsgemäßen Akkumulator-Gerät-Kombination, bei der der Akkumulator an ein Ladegerät angeschlossen ist;
- Figur 2:: eine erste Variante des in Figur 1 dargestellten Ausführungsbeispiels;
- Figur 3:: eine zweite Variante des in Figur 1 dargestellten Ausführungsbeispiels;
- Figur 4:: eine dritte Variante des in Figur 1 dargestellten Ausführungsbeispiels;
- Figur 5:: ein Schaltbild, ähnlich Figur 1, jedoch für eine Akkumulator-GerätKombination, bei der der Akkumulator an einen elektrischen Verbraucher angeschlossen ist.

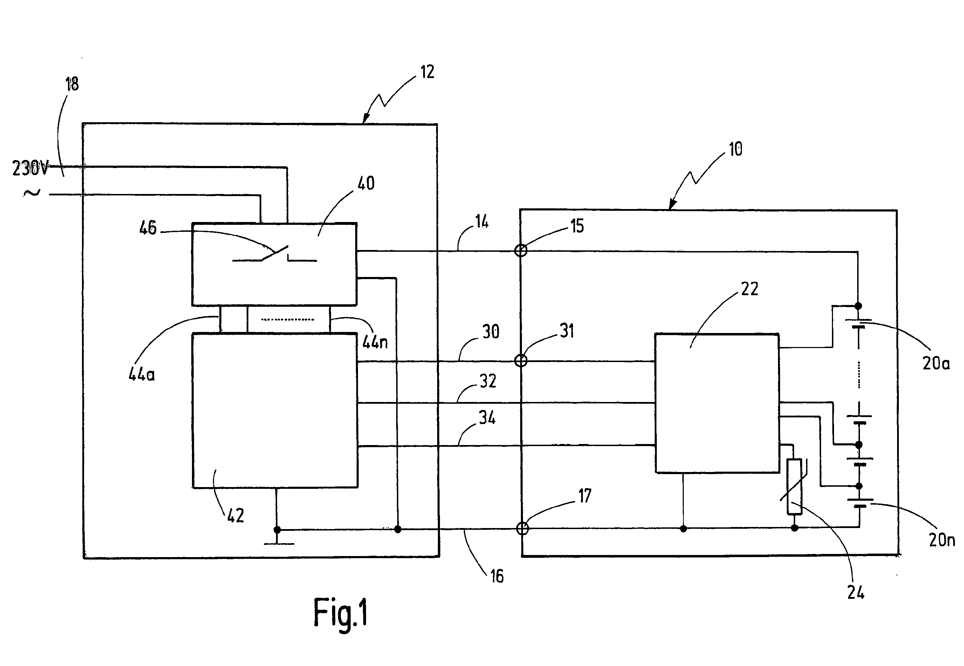

In Figur 1 bezeichnet 10 einen Akkumulator, der umgangssprachlich auch als "Akkupack" bezeichnet wird. Der Akkumulator ist ein Lithium-Ionen-Akkumulator.

Der Akkumulator 10 ist an ein Gerät, im Beispiel der Figur 1 an ein Ladegerät 12, angeschlossen. Die Verbindung zwischen Ladegerät 12 und Akkumulator 10 wird über eine Plusleitung 14 und eine Masseleitung 16 hergestellt, wobei die entsprechenden Stromversorgungsanschlüsse am Akkumulator 10 mit 15 und 17 bezeichnet sind. Das Ladegerät 12 ist über eine Netzleitung 18 an ein Netz, beispielsweise ein 230 V Wechselstromnetz, angeschlossen.

In dem Akkumulator 10 befinden sich n Zellen 20a-20n in Reihenschaltung. Die Zellen 20a-20n stehen mit einer Überwachungselektronik 22 in Verbindung. In räumlicher Nähe zu den Zellen 22a-22n befindet sich ein Temperatursensor 24, beispielsweise ein NTC-Widerstand, der ebenfalls an die Überwachungselektronik 22 angeschlossen ist.

In der Überwachungselektronik 22 sind geeignete Mittel vorgesehen, um Signale zu bilden, die dem Strom I, beispielsweise dem Ladestrom, der Spannung U, insbesondere der Ladespannung, dem Innenwiderstand Rᵢ der Zellen 22a-22n, der Temperatur T der Zellen 22a-22n und ggf. weiteren Parametern entsprechen, die für den Ladezustand des Akkumulators charakteristisch sind. Insbesondere ist die Überwachungselektronik 22 in der Lage, auch die zeitliche Änderung, d.h. die erste zeitliche Ableitung dieser Parameter, zu erfassen und entsprechende Signale zu bilden, also beispielsweise dU/dt, dI/dt, dT/dt und dRᵢ/dt. Die Überwachungselektronik kann auch zwei oder mehr Zustandsgrößen gleichzeitig überwachen.

Ferner kann die Überwachungselektronik aus diesen Signalen sekundäre Signale bilden, die beispielsweise einen Alarmzustand der Zellen 22a-22n melden, also zum Beispiel einen Zustand drohender Überladung, drohender vollständiger Unterladung, Überspannung, Überstrom, Übererhitzung usw. Die so ermittelten bzw. aufbereiteten Signale werden dem Ladegerät 12 über Signalleitungen 30, 32 und 34 übermittelt, insbesondere über einen Signalanschluss 31 des Akkumulators 10, der mit der Signalleitung 30 verbunden ist.

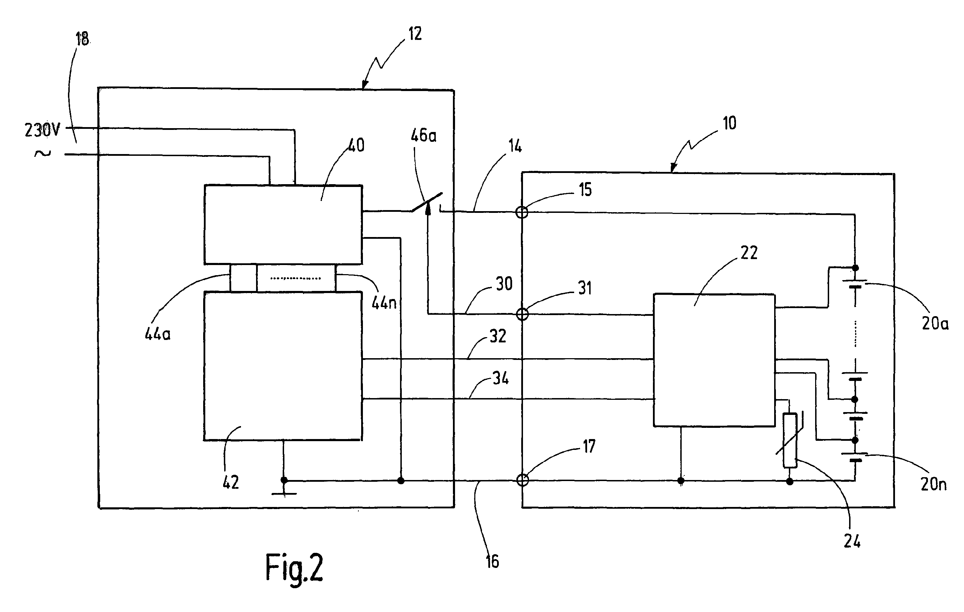

In dem Ladegerät 12 befinden sich ein Schaltnetzteil 40 sowie eine Steuerelektronik 42, die über eine Mehrzahl von Steuerleitungen 44a-44n miteinander verbunden sind. Bei dem in Figur 1 dargestellten Ausführungsbeispiel enthält das Schaltnetzteil 40 einen bei 46 angedeuteten, als Betriebsschalter wirkenden Schalter, mit dem das Ladegerät 12 auf elektronischem Wege ganz abgeschaltet oder zumindest wenigstens eine der Stromversorgungsleitungen 14, 16 stromlos geschaltet, insbesondere unterbrochen werden kann. Der Schalter 46 kann auch an anderer Stelle des Ladegeräts 12 angeordnet sein, wie anhand der Figuren 2 bis 4 noch erläutert werden wird.

Die Steuerelektronik 42 empfängt über die Signalleitungen 30, 32 und 34 die oben erläuterten Signale und stellt über das Schaltnetzteil 40 den Ladestrom I so ein, wie es das erfindungsgemäße Verfahren vorsieht.

Wenn die Überwachungselektronik 22 in der oben beschriebenen Weise ein Signal bildet, das einen Alarmzustand der Zellen 22a-22n darstellt, dann bewirkt dieses Signal, dass das Ladegerät 12 insgesamt abgeschaltet wird. Hierzu liegt beispielsweise am Signalanschluss 31 und damit auf der Signalleitung 30 ein Signal "0" an, wenn kein Alarmzustand erkannt wird, und ein endliches Spannungssignal "1" von beispielsweise +18 V, wenn ein Alarmzustand erkannt wird, beispielsweise eine drohende Überladung oder auch eine drohende vollständige Entladung. Es versteht sich dabei, dass die Signalform "0" bzw. "+18V" hier nur beispielhaft zu verstehen ist und selbstverständlich auch andere analoge oder beispielsweise digitale Signalformen verwendet werden können.

Bei der in Figur 2 dargestellten ersten Variante des Ausführungsbeispiels von Figur 1 befindet sich der hier mit 46a bezeichnete Schalter in der Plusleitung 14. Der Schalter 46a kann beispielsweise als Relais oder als Halbleiterschalter ausgebildet sein.

Der Akkumulator 10 bzw. die Überwachungselektronik 22 betätigen den Schalter 46a direkt, wobei die Signalleitung 30 als "NOT-Aus" wirkt. Der Schalter 46a befindet sich hier auf der Sekundärseite des Ladegeräts 12.

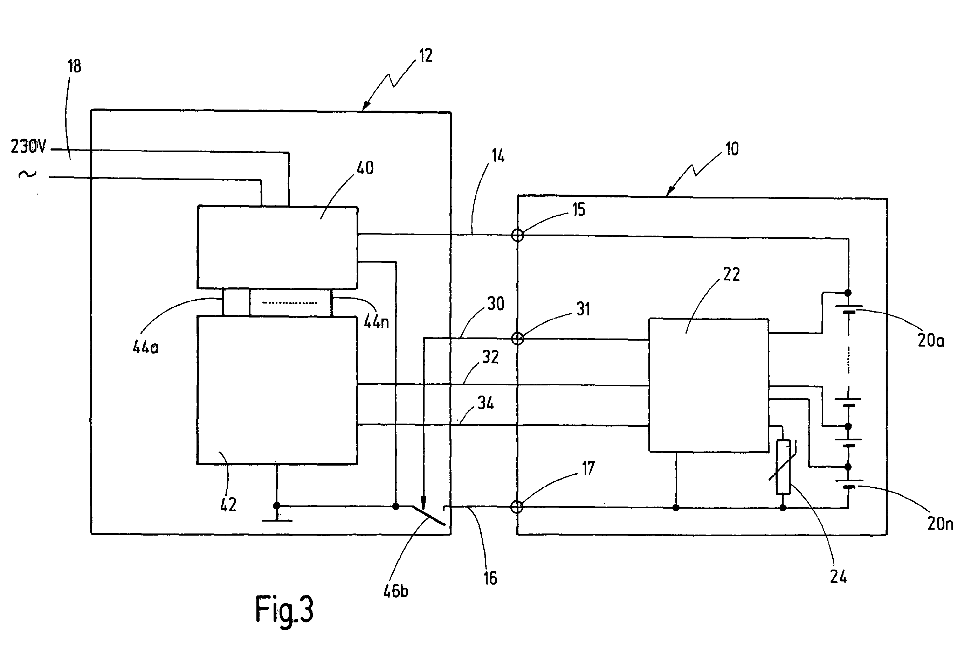

Entsprechend zeigt Figur 3 in einer zweiten Variante die Anordnung des hier mit 46b bezeichneten Schalters in der Masseleitung 16. Ansonsten entspricht die Funktion der Anordnung derjenigen aus Figur 2.

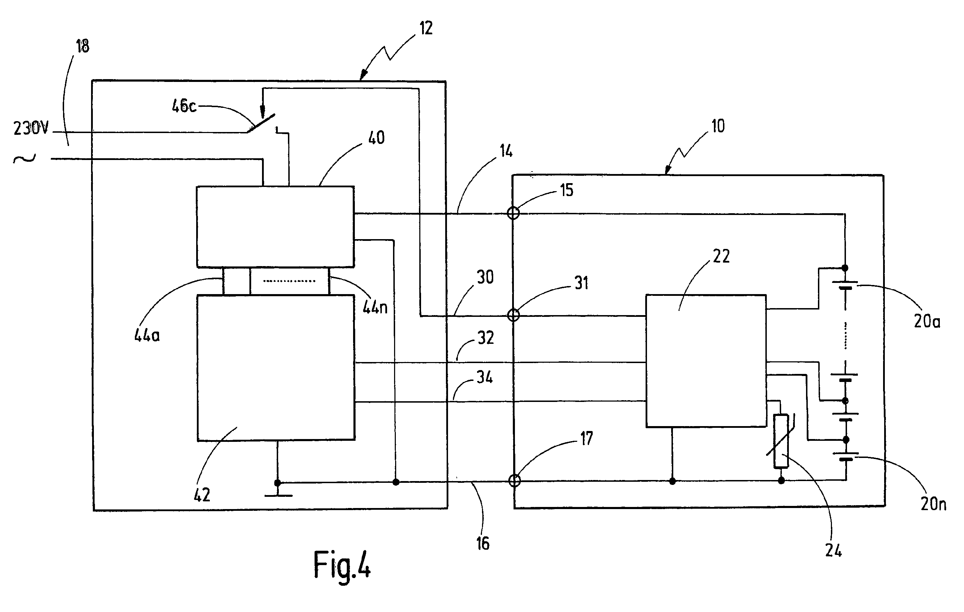

In Figur 4 ist schließlich eine dritte Variante dargestellt, bei der sich der hier mit 46c bezeichnete Schalter in der Netzleitung 18 befindet. Auch hier wirkt die Signalleitung 30 als "NOT-Aus". Der Schalter 46c befindet sich allerdings nunmehr auf der Primärseite des Ladegeräts 12. Denkbar sind auch Kombinationen der Ausführungsbeispiele gemäß den Figuren 2 bis 4 mit zwei oder mehr Schaltern.

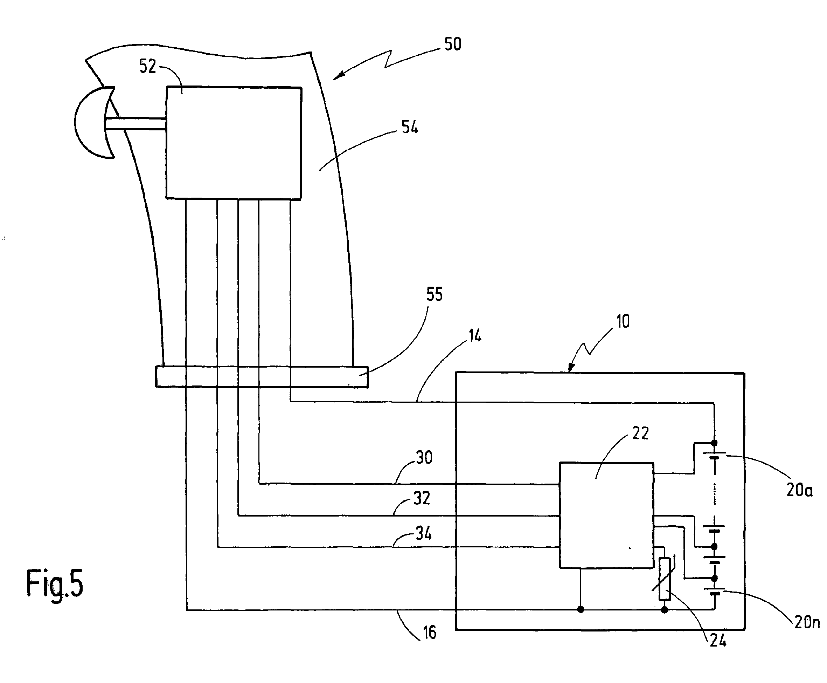

Figur 5 veranschaulicht, dass diese Alarmabschaltung auch dann verwendet werden kann, wenn der Akkumulator 10 an einen Verbraucher angeschlossen ist, beispielsweise ein in Figur 5 angedeutetes, manuell betätigtes Elektrowerkzeug 50 oder ein beliebiges anderes elektrisches oder elektronisches Gerät. Das Elektrowerkzeug 50, beispielsweise eine Bohrmaschine, ein Trennschleifer, ein Schrauber oder dgl., weist einen Betriebsschalter 52 in einem Griff 54 auf. Über eine bei 55 angedeutete Verbindung ist das Elektrowerkzeug 50 mit dem Akkumulator 10 verbunden. Der Akkumulator 10 ist in Figur 5 nur der Einfachheit halber neben dem Elektrowerkzeug 50 dargestellt. In der Praxis befindet er sich innerhalb des Elektrowerkzeugs 50.

Wenn im Betrieb des Elektrowerkzeugs 50 der Akkumulator 10 vollständig entladen oder überhitzt zu werden droht, dann bewirkt das oben erläuterte Alarmsignal über die Signalleitung 30, dass der Betriebsschalter 52 betätigt und damit das Elektrowerkzeug 50 abgeschaltet wird. Dies kann durch eine mechanische Auslösung des Betriebsschalters 52 geschehen oder durch eine elektrische Abkopplung des Betriebsschalters 52 mittels eines Relais, eines Halbleiterschalters oder dgl.

## Patentansprüche

1. Akkumulator mit mindestens einem Stromversorgungsanschluss (15, 17) zum Verbinden mit einem Gerät, mit einer in dem Akkumulator (10) angeordneten Überwachungseinheit, wobei die Überwachungseinheit Mittel zum Erkennen eines Alarmzustandes in dem Akkumulator (10) enthält und die Mittel mit einem Signalanschluss (31) des Akkumulators verbunden sind.

2. Akkumulator nach Anspruch 1, **dadurch gekennzeichnet, dass** die Überwachungseinheit eine Überwachungselektronik (22) ist.

3. Akkumulator nach Anspruch 1 oder 2, **dadurch gekennzeichnet, dass** die Überwachungseinheit eine den Ladezustand des Akkumulators (10) charakterisierende Zustandsgröße überwacht und dass bei Überschreiten eines vorgegebenen Grenzwertes der Zustandsgröße die Mittel den Signalanschluss (31) mit einem Spannungssignal beaufschlagen.

4. Akkumulator nach Anspruch 3, **dadurch gekennzeichnet, dass** an dem Anschluss (31) bei Nicht-Vorhandensein eines Alarmzustandes ein Nullsignal und bei Vorhandensein eines Alarmzustandes ein Spannungssignal anliegt.

5. Akkumulator nach Anspruch 3 oder 4, **dadurch gekennzeichnet, dass** die Zustandsgröße die Spannung (U), der Strom (I), der Innenwiderstand (Rᵢ) oder die Temperatur (T) des Akkumulators (10) ist.

6. Akkumulator nach einem der Ansprüche 3 bis 5, **dadurch gekennzeichnet, dass** die Zustandsgröße die erste zeitliche Ableitung einer den Akkumulator charakterisierenden Zustandsgröße ist.

7. Akkumulator nach Anspruch 6, **dadurch gekennzeichnet, dass** die Zustandsgröße die erste zeitliche Ableitung der Spannung (dU/dt), des Stroms (dI/dt), des Innenwiderstandes (Rᵢ/dt) oder der Temperatur (dT/dt) des Akkumulators (10) ist.

8. Akkumulator-Gerät-Kombination, insbesondere mit einem Akkumulator nach einem der vorhergehenden Ansprüche, bei der das Gerät mit dem Akkumulator (10) über mindestens eine Stromversorgungsleitung (14, 16) verbunden ist, mit einem in dem Gerät angeordneten Betriebsschalter (46) für das Gerät und einer in dem Akkumulator (10) angeordneten Überwachungseinheit, wobei die Überwachungseinheit Mittel zum Erkennen eines Alarmzustandes in dem Akkumulator (10) enthält und die Mittel mit dem Betriebsschalter (46) in Wirkverbindung stehen.

9. Akkumulator-Gerät-Kombination nach Anspruch 8, **dadurch gekennzeichnet, dass** die Mittel durch Betätigen des Betriebsschalters (46) die mindestens eine Stromversorgungsleitung (14, 16) stromlos schalten, vorzugsweise das Gerät abschalten, weiter bevorzugt die mindestens eine Stromversorgungsleitung (14, 16) unterbrechen.

10. Akkumulator-Geräte-Kombination nach Anspruch 8 oder 9, **dadurch gekennzeichnet, dass** die Überwachungseinheit eine den Akkumulator (10) charakterisierende Zustandsgröße überwacht und dass bei Überschreiten eines vorgegebenen Grenzwertes der Zustandsgröße die Mittel mit dem Betriebsschalter (46) in Wirkverbindung treten.

11. Akkumulator-Geräte-Kombination nach einem der Ansprüche 8 bis 10, **dadurch gekennzeichnet, dass** die Überwachungseinheit eine Überwachungselektronik (22) ist, die eine den Akkumulator (10) charakterisierende Zustandsgröße überwacht, wobei die Zustandsgröße die Spannung (U), der Strom (I), der Innenwiderstand (Rᵢ) oder die Temperatur (T) des Akkumulators (10) ist.

12. Akkumulator-Geräte-Kombination nach einem der Ansprüche 8 bis 11, **dadurch gekennzeichnet, dass** die Überwachungseinheit eine Überwachungselektronik (22) ist, die eine den Akkumulator (10) charakterisierende Zustandsgröße überwacht, wobei die Zustandsgröße die erste zeitliche Ableitung der Spannung (dU/dt), die erste zeitliche Ableitung des Stroms (dI/dt), die erste zeitliche Ableitung des Innenwiderstandes (Rᵢ/dt) oder die erste zeitliche Ableitung der Temperatur (dT/dt) des Akkumulators (10) ist.

13. Akkumulator-Geräte-Kombination nach einem der Ansprüche 8 bis 12, **dadurch gekennzeichnet, dass** mindestens zwei Zustandsgrößen gleichzeitig überwacht werden.

14. Akkumulator-Geräte-Kombination nach einem der Ansprüche 8 bis 13, **dadurch gekennzeichnet, dass** der Alarmzustand durch ein Spannungssignal an einem Signalanschluss (31) des Akkumulators signalisiert wird.

15. Akkumulator-Geräte-Kombination nach Anspruch 14, **dadurch gekennzeichnet, dass** an dem Signalanschluss (31) bei Nicht-Vorhandensein eines Alarmzustandes ein Nullsignal und bei Vorhandensein eines Alarmzustandes ein Spannungssignal anliegt.
